# EUROPÄISCHE PATENTSCHRIFT

(11) **EP 3 995 704 B1**
(45) Veröffentlichungstag und Bekanntmachung des Hinweises auf die Patenterteilung: **16.08.2023**
(21) Anmeldenummer: 21203964.8
(22) Anmeldetag: 21.10.2021
(51) Int. Cl.: F16B 5/02, F16B 25/00, F16B 43/00

(54) **VERBINDUNGSMITTEL FÜR BAUKONSTRUKTIONEN**
FASTENERS FOR BUILDING STRUCTURES
ÉLÉMENTS DE FIXATION POUR LES CONSTRUCTIONS DE BÂTIMENTS

(30) Priorität: 23.10.2020 RU 2020134973
(43) Veröffentlichungstag der Anmeldung: 11.05.2022
(73) Patentinhaber: Becht, Waldemar, 35619 Braunfels (DE); Anosenkov, Iurii, Orenburgsky 460532 (RU); Rafailovich, Immel, Evgenij, Kinel 446442 (RU)
(72) Erfinder: Becht, Waldemar, 35619 Braunfels (DE); Anosenkov, Iurii, Orenburgsky 460532 (RU); Rafailovich, Immel, Evgenij, Kinel 446442 (RU)
(74) Vertreter: Meitinger, Thomas Heinz

(56) Entgegenhaltungen:
- EP-A1- 2 468 970
- RU-U1- 180 024
- US-A- 4 909 012

## Beschreibung

### Technisches Gebiet

Die vorliegende Erfindung betrifft ein Verbindungsmittel für Baukonstruktionen gemäß Patentanspruch 1. Das erfindungsgemäße Verbindungsmittel kommt in der Baubranche zum Einsatz und kann für den Aufbau von Vorrichtungen aus Holz (Holzbalken, Rundholzstämme) bzw. aus anderen Baumaterialien genutzt werden, welche über geringfügige Formänderung, lineare bzw. räumliche Verschiebungen sowie Volumen- bzw. Dichteveränderungen -je nach Zeit und äußeren Umwelteinflüssen - zulassen.

### Stand der Technik

Nach Stand der Technik ist ein Verbindungsmittel für den Aufbau von Holzbaumerken und Vorrichtungen bereits bekannt, welches einen kantigen Schraubenkopf für einen passenden Schraubenschlüssel, einen Stift mit dem Gewinde entlang der äußeren Zylinderfläche, ein Anschlagelement sowie eine Feder enthält. In dem System ist der Kantenkopf mit dem Gewindestift fest verbunden, zwischen dem Kopf und dem auf der anderen Seite des Stabes liegenden Gewinde sind auf dem glatten Teil des Stabes ein oberes und ein unteres Anschlagelement mit einer Feder dazwischen koaxial aufgefädelt, die axial verschoben werden können. (RU 90510 U1). Dieses Verbindungsmittel gewährleistet eine wesentliche Verringerung von Rissbildungen zwischen den verbundenen Teilen der Konstruktion, welche infolge von Schrumpfung und Längsverschiebungen aufgrund der Erhöhung der Einheitskraft entstehen. Der Einsatz einer Zylinderfeder sowie von flachen Standard-Schutzscheiben führt jedoch nicht selten zum Verlust von Bindungsstabilität, zu einer möglichen Federschräge zur gemeinsamen Achse, zum Verlust der Aufbauqualität sowie zur Kostensteigerung infolge des Ersatzes von Systemteilen bzw. dessen Austausches.

Die Mängel dieses Verbindungsmittels wurden teilweise durch einen Befestigungsbausatz für die Verbindung von Holzkonstruktionsteilen mit einem Stift, der einen festen Kopf hat, beseitigt (RU 180024 U1). Dabei sind an der oberen Seite des zylindrischen Teils des Stiftes koaxial eine kegelförmige Feder mit der Windung mit dem kleinsten Durchmesser an der unteren Oberfläche des Stiftkopfes sowie ein Anschlagelement darunter aufgefädelt, das die Stützungsmöglichkeit für die Federwindung mit dem größten Durchmesser bietet und an sich eine ringförmige Scheibe mit einem an der äußeren Kante aufrechten Flansch ist, wodurch eine Aushöhlung zwischen dem mittleren Scheibenloch und dem Flansch entsteht. Diese zwei Teile können axial verschoben werden. Anstelle des Stiftes mit einem Kopf kann eine Stahlschraube benutzt werden, deren Schraubenkopf mit den äußeren Kanten für einen passenden Schraubenschlüssel ausgeführt werden kann. Eine Reihe von konstruktiven Lösungen für dieses Verbindungsmittel wurde auf die Verbesserung der Befestigung sowie der Positionierung gerichtet; zum Beispiel wurde der untere zylindrische Teil mit einem kleineren Durchmesser als bei dem oberen zylindrischen Teil ausgeführt und dabei ist der Kopplungsbereich zwischen diesen zwei Teilen kegelförmig ausgeführt; sowie der untere zylindrische Teil kann mit einem kegelförmigen Spitze ausgeführt werden.

Der Einsatz einer kegelförmigen Feder, in der sich jede nachfolgende Windung bei der Kompression teilweise in der vorangehenden positioniert, hat das Problem der Verwinkelung der Achse des Befestigungssystems bei seinem Anziehen im Holz nicht ganz gelöst. Die Ausführung des unteren Anschlagelementes erlaubt eine eindeutige Positionierung der Feder an der Stiftachse immer noch nicht; der ringförmige, aufrechte Flansch behindert die vollständige "Öffnung" der unteren Federwindung zwecks einer engeren Verstauung aller Windungen, verlangt eine genauere Maßhaltigkeit von dem Durchmesser der unteren Federwindung sowie der Scheibe und macht es darüber hinaus nicht möglich, bei Notwendigkeit der Erhöhung des Härtegrads des gesamten Elements die Anzahl der Federwindungen zu erhöhen. Außerdem wurde festgestellt, dass sich die Federwindungen, die standardmäßig mit einem rechtsgängigen Gewinde angefertigt sind, d.h. gewickelt mit einer Durchmesservergrößerung im Uhrzeigersinn von oben nach unten, im Wickelverfahren und bei der Überbelastung immer noch zueinander versetzen, radial vorwölben sowie über die Grenzen der vorangegangenen Windung herausragen können, was zu einem Federaustausch führt.

### Darstellung der Erfindung

Der vorliegenden Erfindung liegt daher die Aufgabe zugrunde, die vorgenannten Nachteile zu beseitigen und ein Verbindungsmittel zu schaffen, welche den vergrößerten Zeit-und Arbeitsaufwand für die Verbindung von Holzkonstruktionen mit dem Befestigungssystem, die fehlende Möglichkeit der Anpresskraft sowie die mutmaßliche Beschädigung der Feder beim Anbringen des Bausatzes beseitigt und gleichzeitigt die Verbindungsqualität aufgrund der Fehlpositionierung der Feder zu der Stiftachse erhöht.

Die Aufgabe wird erfindungsgemäß durch das erfindungsgemäße Verbindungsmittel gemäß Anspruch 1 gelöst, das aus einem zylindrischen Stift mit einem ar seinem oberen Teil befindlichen kantigen Schraubenkopf für einen passenden Schraubenschlüssel, einer kegelförmigen Spitze an seinem unteren Teil, einem Gewinde und einer aufgefädelten kegelförmig ausgebildeten Feder, die mit ihrer kleinsten Windung an dem Schraubenkopf anstößt sowie einem scheibenförmigen Anschlagelement besteht, auf das die Feder mit ihrer größten Windung anstößt, wobei das Anschlagelement ein Innenloch zur Aufnahme des Stifts umfasst und die Form eines mit dem Boden in Richtung Schraubenkopf umgedrehten Tellers aufweist.

Die kegelförmige Feder ist linksgängig gewickelt und zwischen dem kantigen Schraubenkopf für einen passenden Schraubenschlüssel sowie der kleinsten Federwindung kann zusätzlich eine flache Scheibe mit einem Innenloch platziert werden. Der untere zylindrische Teil des Stiftes kann mit einem kleineren Durchmesser als der obere zylindrische Teil ausgefüllt werden. Dabei ist der Kopplungsbereich zwischen diesen zwei Teilen kegelförmig.

Als technisches Ergebnis des Einsatzes dieser Bauart ist es möglich, die Genauigkeit der axialen Positionierung der kegelförmigen Feder zu steigern sowie eine mögliche Erhöhung der Andruckkraft der Feder durch den Einsatz von einer tellerförmigen Scheibe zu gewährleisten. Als zusätzliche Ergebnisse sind die Behebung des Versatzes von Federwindungen bei der Kompression durch den Einsatz einer kegelförmigen Feder mit linksgängiger Wicklung sowie die Gewährleistung der Minderung von Reibungskräften beim Einschrauben und die Belastungsrichtung entlang der Schwerachse des Befestigungsbausatzes durch die Nutzung einer zusätzlichen flachen Scheibe unter dem sechskantigen Kopf. Für die Verbindung von Elementen mit niedrigeren Dichteverhältnissen sowie für die Montagevereinfachung kann ein Stift benutzt werden, bei dem der untere zylindrische Teil des Stiftes mit einem kleineren Durchmesser als der obere zylindrische Teil ausgeführt ist. Dabei ist der Kopplungsbereich zwischen diesen zwei Teilen kegelförmig.

### Kurzbeschreibung der Zeichnungen

Weitere Ziele, Merkmale, Vorteile und Anwendungsmöglichkeiten des erfindungsgemäßen Verbindungsmittels ergeben sich aus der nachfolgenden Beschreibung eines Ausführungsbeispiels anhand der Zeichnungen.

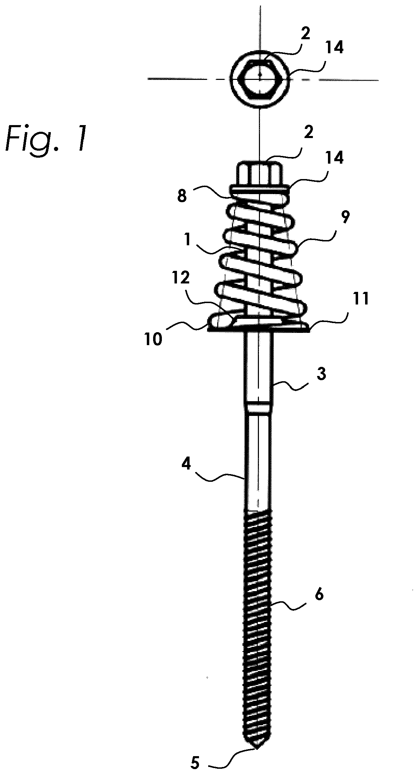

In den Zeichnungen zeigen
Fig. 1 das erfindungsgemäßen Verbindungsmittel in einer vorteilhaften Ausführungsform;

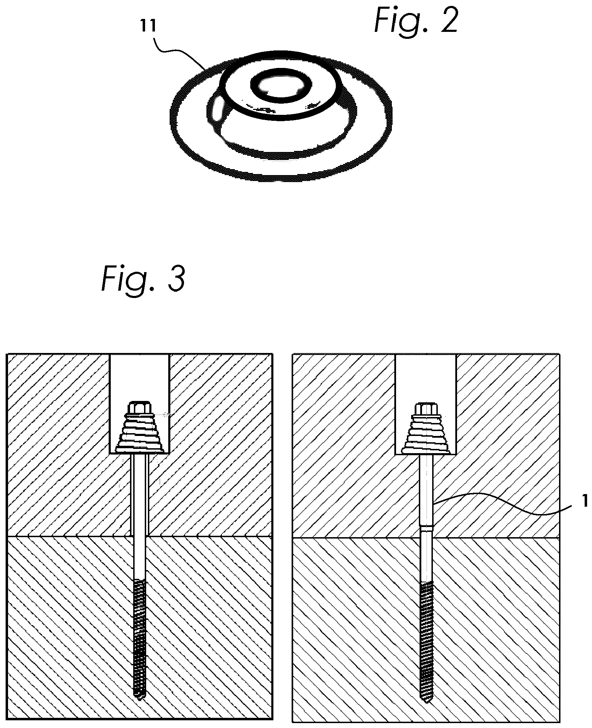

Fig. 2 eine detaillierte Darstellung der tellerförmigen Scheibe;
Fig. 3 verschiedene Varianten des Einsatzes des Verbindungsmittels.

### Ausführung der Erfindung

Der zylindrische Stift 1 besteht aus dem kantigen Schraubenkopf 2 für einen passenden Schraubenschlüssel, dem oberen Teil 3, dem unteren Teil 4, an dem die kegelförmige Spitze 5 ausgeführt und das Gewinde 6 angebracht ist. Bei einer Durchmesserdifferenz bei den Teilen 3 und 4 ist der Kopplungsbereich 7 zwischen diesen zwei Teilen des Stiftes 1 kegelförmig. An den Kopf 2 stößt die kegelförmige Feder 9, die an den Stift 1 aufgefädelt ist, mit der kleinsten Windung 8 an. Die größte Windung 10 stößt an die tellerförmige Scheibe 11 an, die mit dem Boden 12 nach oben durch das Innenloch 13 im Boden 12 an den Stift 1 aufgefädelt ist.

Die kegelförmige Feder 9 wurde mit linksgängiger Wicklung dargestellt, wo die Steigerung vom Windungsdurchmesser von der oberen bis zur unteren Windung gegen den Uhrzeigersinn verläuft Zwecks der Erhöhung von Reibungskräften beim Einschrauben des Verbindungsmittels wurden die äußeren Berührungsoberflächen der Windungen 8 und 10 der kegelförmigen Feder 9 flach, durch z.B. Schleifen, ausgeführt.

Wenn der kantige Schraubenkopf für einen passenden Schraubenschlüssel 2 ringförmig ohne Untersatz ausgeführt ist, wird zwischen der Windung 8 mit dem kleinsten Durchmesser und dem Kopf 2 des Stiftes 1 eine flache Scheibe 14 mit dem Innenloch 15 platziert.

Das Verbindungsmittel wird zusammengebaut, eingestellt und funktioniert folgendermaßen: Zwecks der Verbindung von Elementen 16 und 17 wird in der Regel an dem zu verbindenden Element 16 eine Vertiefung 18 vorbereitet_ in deren Mitte eine Durchbohrung 19 koaxial zu den Vertiefungswänden ausgeführt wird, in die der mittlere Stift 1 mit den an ihm der Reihe nach aufgefädelten flachen Scheibe 14 (bei Bedarf), der kegelförmigen Feder 9 sowie der Scheibe 11 eingestellt wird. Die Größe des Durchmessers der Vertiefung 18 soll den Durchmesser der Scheibe II zwecks der ungehinderten Öffnung der Windung 10 der Feder 9 mit kleiner Toleranz überschreiten. Die Durchbohrung 19 wird mit einem Durchmesser entsprechend dem Gesamtdurchmesser des oberen Teiles 3 sowie des unteren feiles 4 des Stiftes I bzw., mit einer kleinen Toleranz ausgeführt. In diesem Fall wird das feste Einspannen des oberen Teils 3 des Stiftes 1 durch das Material des zu verbindenden Elementes 16 ausgeschlossen sowie die Andruckkraft der kegelförmigen Feder 9 wird im vollen Umfang im Laufe der gesamten Zeitdauer der Verbindungsarbeit ausgeübt. Die kegelförmige Spitze 5 erleichtert den Eingang von ersten Windungen 6 in das Material des Elementes 17.

Im Falle einer niedrigen Dichte des Materials der zu verbindenden Elementen und einer geringeren Wahrscheinlichkeit der Einklemmung des oberen Teils 3 des Stiftes 1 durch das Material wird ein Mittenstift I benutzt, der einen oberen Feil 3 vom größeren Durchmesser als der untere Teil 4 hat. Der Kopplungsbereich 7 dazwischen wird zwecks der Vereinfachung des Eingangs des Stiftes I in das Material des Elementes 16 beim Einschrauben kegelförmig ausgeführt. Solch eine Bauart des Mittenstiftes 1 ist fertigungsgerecht und lässt die Anbringung des Verbindungsmittels zu, ohne eine Durchbohrung 19 im zu verbindenden Element 17 vorbereiten zu müssen.

Während des Einschraubens des Gewindes 6 in das Material des Elementes 17 mit einem Werkzeug (Schraubendreher), das den Kopf 2 des Stiftes 1 dreht, öffnet sich die untere Windung 10 ohne entgegenwirkende Hindernisse am Rand des Scheibentellers 11 vollständig bis zur festen Kompression aller Windungen der kegelförmigen Feder 9 aneinander Dabei werden die unteren Windungen der kegelförmigen Feder 9 an dem Boden 12 der Scheibe 11 zusätzlich zentriert, da sie sich aneinander anlegen und die Trapezform der Bodenoberfläche 12 der Scheibe 11 an ihren inneren Oberflächen wiedergeben und somit die Möglichkeit der Versetzung zur Achse des Stiftes 1 ausschließen.

Die linksgängige Wicklung der kegelförmigen Feder 9 begünstigt zusätzlich beim Drehen des Stiftes 1 im Uhrzeigersinn das. aufeinanderfolgende Anlegen der Windungen, da der Drehungsrichtung nicht die radiale Versetzung noch das "Herausstoßen" von Finden beeinflusst, sondern deren Zentrierung an der Achse des Stiftes 1.

Wenn der sechskantige Kopf 2 des Stiftes 1 ohne ringförmigen Untersatz ausgeführt ist, wird die Verwendung einer flachen Scheibe 14, besonders in Kombination, mit der mit ihrer kontaktierenden geschliffenen Oberfläche der oberen Windung 8 der kegelförmigen Feder 9 die Ausrichtung der Belastung an der Achse fördern und das Gleiten des Kopfes 2 bei der Montage des Verbindungsmittels erleichtern.

Solche konstruktiven Lösungen am Verbindungsmittel wie die Ausführung der speziellen Scheibe 11 in Form eines mit dem Boden nach oben umgedrehtem Teller sowie die linksgängige Wicklung der kegelförmigen Feder 9 erhöhen die Montagequalität durch die Positionierung des Bausatzes an der Achse, schließen den Ausschuss einer Feder aus, ermöglichen die Steigerung der Andruckkraft des Bausatzes durch die Erhöhung von Windungsanzahl sowie die Minderung des Arbeitsaufwands der Montage. Die verschiedene Ausführung des Stifts 1 ermöglichen den Einsatz des Verbindungsmittels für Verbindung von Elementen von verschiedener Dichte.

### Liste der Bezugsziffern

- 1: zylindrischer Stift
- 2: kantiger Schraubenkopf
- 3: oberer Teil des Stifts
- 4: unterer Teil des Stifts
- 5: kegelförmige Spitze des Stifts
- 6: Gewinde
- 7: Kopplungsbereich
- 8: kleinsten Windung
- 9: kegelförmige Feder
- 10: größte Windung
- 11: Scheibenteller
- 12: Boden
- 13: Innenloch
- 14: flache Scheibe
- 15: Innenloch an der flachen Scheibe
- 16, 17: Elemente
- 18: Vertiefung
- 19: Durchbohrung

## Patentansprüche

1. Verbindungsmittel für Baukonstruktionen, bestehend aus einem zylindrischen Stift (1) mit einem an seinem oberen Teil (3) befindlichen kantigen Schraubenkopf (2) für einen passenden Schraubenschlüssel und einer kegelförmigen Spitze (5) an seinem unteren Teil (4), einem Gewinde (6) und einer aufgefädelten kegelförmig ausgebildeten Feder (9), die mit ihrer kleinsten Windung (8) an dem Schraubenkopf (2) anstößt, sowie einem scheibenförmigen Anschlagelement (11), auf das die Feder (9) mit ihrer größten Windung (10) anstößt, wobei das Anschlagelement (11) ein Innenloch (13) zur Aufnahme des Stifts (1) umfasst und die Form eines mit dem Boden (12) in Richtung Schraubenkopf (2) umgedrehten Tellers aufweist, **dadurch gekennzeichnet, dass** die Feder (9) eine linksgängige Wicklung aufweist.

2. Verbindungsmittel (1) nach Anspruch 1,
**dadurch gekennzeichnet, dass**
der Schraubenkopf (2) einen ringförmigen Untersatz umfasst.

3. Verbindungsmittel (1) nach Anspruch 1,
**dadurch gekennzeichnet, dass**
an dem zylindrischen Stift (1) zwischen dem kantigen Schraubenkopf (2) für einen passenden Schraubenschlüssel sowie der kleinsten Windung (8) der kegelförmigen Feder (9) zusätzlich eine flache Scheibe (14) mit einem Innenloch (15) angebracht ist.

4. Verbindungsmittel (1) nach einem der vorangegangenen Ansprüche,
**dadurch gekennzeichnet, dass**
der untere zylindrische Teil (4) des Stiftes (1) mit einem kleineren Durchmesser als der obere zylindrische Teil (3) ausgeführt ist, wobei der Kopplungsbereich (7) zwischen diesen zwei Teilen (3, 4) kegelförmig ausgebildet ist.

## Claims

1. Fasteners for building structures, consisting of a cylindrical pin (1) having an angular screw head (2) on its upper portion (3) matching a suitable wrench, and a conical tip (5) on its lower portion (4), a thread (6) and a conically formed spring (9) wound therearound, which, with its smallest turn (8), abuts against the screw head (2), and a disc-shaped stop element (11), against which the spring (9) abuts with its largest turn (10), the stop element (11) comprising an inner hole (13) for receiving the pin (1) and having the shape of a plate with the bottom (12) turned upside down in the direction of the screw head (2), **characterized in that** the spring (9) has a left-hand winding.

2. The fasteners (1) according to claim 1,
**characterized in that**
the screw head (2) comprises an annular base.

3. The fastener (1) according to claim 1,
**characterized in that**
a flat washer (14) with an inner hole (15) is additionally attached to the cylindrical pin (1) between the angular screw head (2) for a matching wrench and the smallest turn (8) of the conical spring (9).

4. The fastener (1) according to one of the preceding claims,
**characterized in that**
the lower cylindrical portion (4) of the pin (1) is r with a smaller diameter than the upper cylindrical portion (3), the coupling region (7) between these two portions (3, 4) being conically formed.

## Revendications

1. Elément de fixation pour constructions de bâtiments, composé d'une goupille cylindrique (1) avec une tête de vis anguleuse (2) située sur sa partie supérieure (3) pour une clé adaptée et une pointe conique (5) sur sa partie inférieure (4), d'un filetage (6) et d'un ressort (9) de forme conique placé là-dessus, qui vient en butée contre la tête de vis (2) par sa plus petite spire (8) , ainsi qu'un élément de butée (11) en forme de disque, sur lequel le ressort (9) vient en butée par sa plus grande spire (10), l'élément de butée (11) comprenant un trou intérieur (13) destiné à recevoir la goupille (1) et présentant la forme d'une assiette retournée avec le fond (12) en direction de la tête de vis (2), **caractérisé en ce que** le ressort (9) présente un enroulement à gauche.

2. Elément de fixation (1) selon la revendication 1,
**caractérisé en ce que**
la tête de vis (2) comprend une embase annulaire.

3. Elément de fixation (1) selon la revendication 1,
**caractérisé en ce que**
un disque plat (14) avec un trou intérieur (15) est en outre fixée à la goupille cylindrique (1) entre la tête de vis anguleuse (2) pour une clé adaptée et la plus petite spire (8) du ressort conique (9).

4. Elément de fixation (1) selon l'une des revendications précédentes,
**caractérisé en ce que**
la partie cylindrique inférieure (4) de la goupille (1) est réalisée avec un diamètre inférieur à celui de la partie cylindrique supérieure (3), la zone d'accouplement (7) entre ces deux parties (3, 4) étant de forme conique.
